# EUROPÄISCHE PATENTSCHRIFT

(11) **EP 1 878 591 B1**
(45) Veröffentlichungstag und Bekanntmachung des Hinweises auf die Patenterteilung: **23.03.2011**
(21) Anmeldenummer: 07109260.5
(22) Anmeldetag: 31.05.2007
(51) Int. Cl.: B60C 9/00

(54) **Lage mit in eine Kautschukmischung eingebetteten Festigkeitsträgern und Fahrzeugluftreifen mit einer Gürtelbandage daraus**
Layer with rigidity supports embedded in a rubber mixture and vehicle pneumatic tyre with a belt bandage therefrom
Emplacement doté de supports de résistance inclus dans un mélange de caoutchouc et pneu de véhicule doté d'une couche de revêtement ainsi composée

(30) Priorität: 10.07.2006 DE 102006031780
(43) Veröffentlichungstag der Anmeldung: 16.01.2008
(73) Patentinhaber: Continental Reifen Deutschland GmbH, 30165 Hannover (DE)
(72) Erfinder: Reese, Wolfgang, 31228 Peine (DE)
(74) Vertreter: Finger, Karsten

(56) Entgegenhaltungen:
- EP-A- 0 661 179
- GB-A- 2 003 525
- US-A- 4 333 507
- US-A- 5 404 924

## Beschreibung

Die Erfindung betrifft eine Lage mit in eine unvulkanisierte Kautschukmischung eingebetteten Festigkeitsträgern für die Gürtelbandage von Fahrzeugluftreifen, wobei die Festigkeitsträger innerhalb der Lage im Wesentlichen parallel zueinander verlaufen und Hybridcorde sind, die aus einem ersten verdrehten Garn mit einem hohen Elastizitätsmodul von zumindest 25000 N/mm² und einem zweiten verdrehten Garn mit einem niedrigen Elastizitätsmodul von nicht mehr als 15000 N/mm², die miteinander endverdreht sind, aufgebaut sind, wobei das Garn mit dem niedrigsten Elastizitätsmodul eine Feinheit ≤ 940 dtex aufweist. Eine solche Lage wird von Dokument EP 0 661 179-A1 offenbart. Ferner betrifft die Erfindung einen Fahrzeugluftreifen, enthaltend eine Gürtelbandage mit einer solchen Lage.

Um bei Fahrzeugluftreifen, insbesondere beim Hochgeschwindigkeitseinsatz, eine Erhebung des Reifens durch die im Fahrbetrieb auftretenden Fliehkräfte zu verhindern, ist es bekannt, bei einem Fahrzeugluftreifen, der im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort durch Umschlingen zugfester Wulstkerne verankert ist, einen radial außen befindlichen, Profilrillen aufweisenden Gummilaufstreifen und einen Gürtel zwischen dem Gummilaufstreifen und der Karkasse aufweist, eine Gürtelbandage vorzusehen. Die Gürtelbandage kann ein- oder mehrlagig ausgebildet sein, deckt zumindest die Gürtelränder ab und enthält parallel und im Wesentlichen in Umfangsrichtung verlaufende Festigkeitsträger in Form von Corden, die in Gummi eingebettet sind.

Die Bandage wird bei der Reifenherstellung in Form von Lagen mit in eine unvulkanisierte Kautschukmischung eingebetteten Festigkeitsträgern aufgebracht, die auf den Gürtel gewickelt oder gespult werden. Die Festigkeitsträger werden für solche Lagen in Kautschuk eingebettet, indem eine Schar von im Wesentlichen parallel liegenden fadenförmigen Festigkeitsträgern, die in der Regel thermisch und/oder zur besseren Haftung am einbettenden Gummi in dem Fachmann bekannter Art mit einer Imprägnierung vorbehandelt sind, in Längsrichtung einen Kalander oder einen Extruder zur Ummantelung mit einer Kautschukmischung durchläuft. Bei der Bombage und Vulkanisation des Reifens erhebt/dehnt sich der Reifen in der Regel im Schulterbereich um ca. 1 bis 2 % und im Mittenbereich um ca. 3 bis 4 % im Vergleich zum unvulkanisierten Rohling, wenn der Rohling auf einer flachen Trommel gewickelt wird.

Die Festigkeitsträger der Bandage sollen bei der Reifenherstellung eine ausreichende Erhebung bei der Bombage und in der Vulkanisationsform zulassen, damit der Reifen präzise ausgeformt werden kann, und sie sollen nach der Fertigstellung des Reifens im Fahrbetrieb eine gute Hochgeschwindigkeitstauglichkeit gewährleisten.

Als Festigkeitsträger für die Bandage sind schon unterschiedlichste Corde vorgeschlagen worden. So werden beispielsweise in der EP-B 0 335 588, der EP-B 0 661 179 und der EP-B 1475 248 für die Festigkeitsträgercorde in der Gürtelbandage Hybridcorde vorgeschlagen, die aus Garnen mit hohem und mit niedrigerem Elastizitätsmodul zusammengedreht sind. Die in diesen Schriften genannten Hybridcorde weisen spezielle Kraft-Dehnungs-Verhalten auf. Die Corde weisen in einem Zugkraft-Dehnungs-Diagramm bei geringer Dehnung zunächst eine geringe Steigung der Kurve auf; bei höherer Dehnung steigt dann die Kurve stark an. In diesem letzten Bereich ist eine geringe weitere Dehnung mit hohem Kraftaufwand verbunden. Dieses Kraft-Dehnungs-Verhalten ermöglicht die Erhebung bei der Bombage und der Vulkanisation und macht den Reifen Hochgeschwindigkeitstauglich.

Bei den aus der EP-B 0 335 588, der EP-B 0 661 179 und der EP-B 1 475 248 bekannten Hybridcorden weist das hochmodulige Garn stets eine Feinheit von mehr als 1100 dtex auf. Es hat sich aber herausgestellt, dass derartige Corde beim Einsatz als Festigkeitsträger in Gürtelbandagen nicht immer zu einem gewünschten sehr niedrigen Wärmeaufbau im Bereich des Gürtels beim Fahrbetrieb führen. Wird der Wärmeaufbau beim Reifen zu groß, kann es zu einer Schädigung der angrenzenden Materiallagen kommen.

Der vorliegenden Erfindung liegt daher die Aufgabe zu Grunde, Lagen aus in Kautschuk eingebetteten Festigkeitsträgern für die Gürtelbandage von Reifen bereitzustellen, die eine sehr gute Hochgeschwindigkeitshaltbarkeit beim Reifen gewährleisten und zusätzlich einen geringeren Wärmeaufbau im Reifen bewirken.

Gelöst wird diese Aufgabe erfindungsgemäß dadurch, dass bei den Hybridcorden das Garn mit dem hohen Elastizitätsmodul eine Feinheit ≤ 840 dtex aufweist.

Der Grundgedanke der Erfindung ist darin zu sehen, dass die Corde in der erfindungsgemäßen Lage dünner ausgebildet sind und daher insgesamt eine geringere Lagenstärke der Bandage ermöglichen. Durch die dünneren bewegten Lagen kommt es während der im Fahrbetrieb auftretenden Walkbewegungen zu einem geringeren Wärmeaufbau. Letztendlich wird dadurch ein Überhitzen des Gürtelbereiches verhindert.

Außerdem bieten Reifen mit den erfindungsgemäßen Lagen als Gürtelbandage den Vorteil eines verringerten Abplattens bei Last (Flatspotting) durch ein verringertes Schrumpfverhaltens des Hybridcordes. Ferner kann das Reifengewicht im Vergleich zu Reifen mit Hybridcorden mit höheren Feinheiten von hoch- und niedrigmoduligem Garn reduziert werden, ohne dass Einbußen in anderen Reifeneigenschaften hingenommen werden müssen, da der Cord leichter ist und für die Kalandrierung der dünneren Lagen weniger Kautschukmischung notwendig ist.

Die erfindungsgemäße Lage mit dem dünnen Hybridcord ermöglicht ferner eine Reduzierung der Reifenherstellkosten, da die Hybridcorde innerhalb der Lage pro m² preiswerter sind als solche mit höheren Feinheiten

Gemäß einer vorteilhaften Weiterbildung der Erfindung sind die Hybridcorde symmetrisch aufgebaut sind, d. h. die Erstverdrehungszahlen des ersten und des zweiten Garnes sind im Wesentlichen gleich mit einer maximalen Abweichung von 7 %, beide Garne sind in Z-Richtung gedreht und der Cord ist mit einer den Erstverdrehungszahlen im Wesentlichen gleichen Endverdrehungszahl in S-Richtung zusammengedreht, wobei die Erst- und Endverdrehungszahlen 380 bis 500 T/m betragen. Selbstverständlich können auch beide Garne in S-Richtung gedreht und der Cord in Z-Richtung endverdreht sein. Auf diese Weise erhält man einen besonders gut verarbeitbaren Cord, der eine gute Flexibilität und Ermüdungsbeständigkeit aufweist.

Für problemlosen Reifenbau mit Vulkanisation und große Hochgeschwindigkeitstauglichkeit weisen die Festigkeitsträger die folgenden Kraft-Dehnungs-Eigenschaften auf:
maximal 20 N bei 1 % Dehnung,
maximal 35 N bei 2 % Dehnung,
maximal 55 N bei 3 % Dehnung,
maximal 80 N bei 4 % Dehnung und
mindestens 125 N bei 6 % Dehnung.

Als Garn mit hohem Elastizitätsmodul kann es sich z. B. um Garne aus Kohlefasern oder aus Glasfasern handeln. Gemäß einer vorteilhaften Weiterbildung der Erfindung handelt es sich bei dem Garn mit hohem Elastizitätsmodul jedoch um ein Aramidgarn. Das Aramidgarn kann dabei aus 500 bis 800 Einzelfilamenten bestehen. Aramidgarne weisen eine besonders hohe Zugfestigkeit und Reißfestigkeit auf, sind thermisch besonders stabil und haben ein geringes Gewicht.

Als Garn mit niedrigem Elastizitätsmodul kann z. B. Polyamid-, Polyester- oder Rayon-Garn eingesetzt werden. Bevorzugt ein Nylongarn, z. B. Nylon 6 oder Nylon 6.6, eingesetzt, das preiswert ist und eine gute Ermüdungsbeständigkeit bei wechselnder Zug/Druck-Belastung aufweist. Das Nylongarn kann dabei aus 90 bis 180 Einzelfilamenten bestehen.

Der Unterschied in den Feinheiten zwischen dem Garn mit dem niedrigen Modul und dem Garn mit dem hohen Modul sollte möglichst gering gewählt werden, um einen möglichst gleichmäßigen Cord zu erhalten, der sich gut verarbeiten lässt und der eine gute Restfestigkeit nach Ermüdung aufweist. Als besonders vorteilhaft in dieser Hinsicht hat sich ein Hybridcord aus Aramidgarn mit 840 dtex und einem Nylongarn mit 940 dtex erwiesen, der eine hervorragende Restfestigkeit bei Ermüdung aufweist und der gleichzeitig als Lage kostengünstig ist.

Um die Haftung der Festigkeitsträger zum Gummi zu gewährleisten, ist es vorteilhaft, wenn die Festigkeitsträger mit einem RFL-Dip (Resorcin-Formaldehyd-Lösung) zur Haftung zwischen Gummi und Festigkeitsträger gedippt sind. Der Dip kann im 1-Bad- oder 2-Bad-Dipverfahren aufgebracht werden, bevor die gedippten Festigkeitsträger mit einer unvulkanisierten Kautschukmischung kalandriert werden. Die Fadendichte innerhalb einer kalandrierten Lage kann dabei für optimale Reifeneigenschaften 80 bis 120 Fäden pro 10 cm Lagenbreite, vorzugsweise 90 bis 100 Fäden pro 10 cm Lagenbreite, betragen.

Die erfindungsgemäßen Lagen werden bei der Herstellung von Fahrzeugluftreifen als Gürtelbandage eingesetzt. Die Fahrzeugluftreifen weisen üblicherweise eine Radialkarkasse, die im Wulstbereich durch Umschlingen zugfester Wulstkerne verankert ist, einen radial außen befindlichen, Profilrillen aufweisenden Laufstreifen, einen zwischen dem Laufstreifen und der Karkasse befindlichen Gürtel aus wenigstens einer Gürtellage mit gummierten Festigkeitsträgern und gegebenenfalls eine zwischen Laufstreifen und Gürtel angeordnete ein- oder mehrlagige Gürtelbandage für den Gürtel aus parallel und im Wesentlichen in Reifenumfangsrichtung verlaufenden Festigkeitsträgern, die zumindest die Gürtelränder abdeckt, auf.

Ein Fahrzeugluftreifen mit der erfindungsgemäßen Lage als Gürtelbandage kann mittels herkömmlicher Reifenherstellprozesse hergestellt werden, in dem die einzelnen Reifenbauteile auf eine Reifenaufbautrommel gewickelt werden und der Reifen anschließend bombiert und vulkanisiert wird.

Die Erfindung soll nun anhand von Vergleichs- und Ausführungsbeispielen, die in der Tabelle 1 dargestellt sind, näher erläutert werden.

In der Tabelle 1 sind die Eigenschaften eines Hybridcordes A für die erfindungsgemäße Lage neben den Eigenschaften eines aus dem Stand der Technik bekannten Hybridcordes aufgelistet. Der Hybridcord für die erfindungsgemäße Lage besteht aus einem Aramidgarn mit einer Feinheit von 840 dtex, Z-gedreht mit 480 T/m Erstverdrehung und einem Garn aus Nylon 6.6 mit einer Feinheit von 940 dtex, Z-gedreht mit 480 T/m Erstverdrehung, die mit einer Endverdrehung von 480 T/m zu einem Hybridcord (Aramid 840×1 + PA6.6 940×1) in S-Richtung verdreht wurden. Als Vergleich dient zum einen ein Cord B aus Aramidgarn mit einer Feinheit von 1670 dtex, Z-gedreht mit 370 T/m Erstverdrehung und Nylon 6.6 mit einer Feinheit von 1400 dtex, Z-gedreht mit 370 T/m Erstverdrehung, die mit einer Endverdrehung von 370 T/m zu einem Hybridcord (Aramid 1670×1 + PA6.6 1400×1) in S-Richtung verdreht wurden, zum anderen ein Cord C aus Aramidgarn mit einer Feinheit von 1100 dtex, Z-gedreht mit 480 T/m Erstverdrehung und Nylon 6.6 mit einer Feinheit von 940 dtex, Z-gedreht mit 480 T/m Erstverdrehung, die mit einer Endverdrehung von 480 T/m zu einem Hybridcord (Aramid 1100×1 + PA6.6 940×1) in S-Richtung verdreht wurden.

**Tabelle 1**

| **Eigenschaft** | **Hybridcord A** Aramid 840×1 + Nylon 6.6 940×1 | **Hybridcord B** Aramid 1680×1 + Nylon 6.6 1400×1 | **Hybridcord C** Aramid 1100×1 + Nylon 6.6 940×1 |
|---|---|---|---|
| Durchmesser [mm] | 0,54 | 0,75 | 0,58 |
| Schrumpf [%] | 2,5 | 3,5 | 3,0 |
| Gewicht [g/100 m] | 18,9 | 34,3 | 22,2 |
| (Feinheit [dtex]) | (1890) | (3430) | (2220) |

Die Bestimmung des Schrumpfes erfolgte gemäß ASTM D885 und ASTM D4974.

Die Hybridcorde A für die erfindungsgemäße Lage zeichnen sich durch einen geringeren Durchmesser aus, dies resultiert in einer geringeren Lagenstärke der Bandage und führt dadurch zu einem geringeren Wärmeaufbau.

Das reduzierte Schrumpfverhalten des Hybridcordes A im Vergleich zu den Hybridcorden B und C bewirkt, dass bei der Verwendung der Lage mit Hybridcord A das Abplatten bei Last (Flatspotting) verringert ist.
Der Hybridcord A ist zudem leichter und durch den geringeren Durchmesser wird weniger Kalandriermischung benötigt, so dass der Reifen mit einer solchen Gürtelbandage im Gewicht reduziert ist.

## Patentansprüche

1. Lage mit in eine unvulkanisierte Kautschukmischung eingebetteten Festigkeitsträgern für die Gürtelbandage von Fahrzeugluftreifen,
wobei die Festigkeitsträger innerhalb der Lage im Wesentlichen parallel zueinander verlaufen und Hybridcorde sind, die aus einem ersten verdrehten Garn mit einem hohen Elastizitätsmodul von zumindest 25000 N/mm² und einem zweiten verdrehten Garn mit einem niedrigen Elastizitätsmodul von nicht mehr als 15000 N/mm², die miteinander endverdreht sind, aufgebaut sind, wobei das Garn mit dem niedrigen Elastizitätsmodul eine Feinheit ≤ 940 dtex aufweist,
**dadurch gekennzeichnet, dass** das Garn mit dem hohen Elastizitätsmodul eine Feinheit ≤ 840 dtex aufweist.

2. Lage nach Anspruch 1, **dadurch gekennzeichnet, dass** die Hybridcorde symmetrisch aufgebaut sind, d. h. die Erstverdrehungszahlen des ersten und des zweiten Garnes sind im Wesentlichen gleich mit einer maximalen Abweichung von 7 %, beide Garne in gleicher Richtung, entweder in Z- oder in S-Richtung, gedreht und der Cord ist mit einer den Erstverdrehungszahlen im Wesentlichen gleichen Endverdrehungszahl in entgegen gesetzter Richtung, entweder in S- oder in Z-Richtung, zusammengedreht, wobei die Erst- und Endverdrehungszahlen 380 bis 500 T/m betragen.

3. Lage nach Anspruch 1 oder 2, **dadurch gekennzeichnet, dass** die Festigkeitsträger folgende Kraft-Dehnungs-Eigenschaften aufweisen:
maximal 20 N bei 1 % Dehnung,
maximal 35 N bei 2 % Dehnung,
maximal 55 N bei 3 % Dehnung,
maximal 80 N bei 4 % Dehnung und
mindestens 125 N bei 6 % Dehnung.

4. Lage nach zumindest einem der vorhergehenden Ansprüche, **dadurch gekennzeichnet, dass** das Garn mit dem hohen Elastizitätsmodul ein Aramidgarn ist.

5. Lage nach zumindest einem der vorhergehenden Ansprüche, **dadurch gekennzeichnet, dass** das Garn mit dem niedrigen Elastizitätsmodul ein Nylongarn ist.

6. Lage nach zumindest einem der vorhergehenden Ansprüche, **dadurch gekennzeichnet, dass** die Festigkeitsträger mit einem RFL-Dip zur Haftung zwischen Gummi und Festigkeitsträger gedippt sind.

7. Lage nach zumindest einem der vorhergehenden Ansprüche, **dadurch gekennzeichnet, dass** die Fasendichte innerhalb einer kalandrierten Lage 80 bis 120 Fäden pro 10 cm Lagenbreite, vorzugsweise 90 bis 100 Fäden pro 10 cm Lagenbreite, beträgt.

8. Fahrzeugluftreifen enthaltend eine Gürtelbandage mit einer Lage gemäß einem der Ansprüche 1 bis 7.

## Claims

1. Ply having strength members embedded in an unvulcanized mixture of rubber, for the belt bandage of pneumatic vehicle tyres,
wherein the strength members form an essentially parallel arrangement within the ply and are hybrid cords constructed of a first twisted yarn having a high modulus of elasticity of at least 25 000 N/mm² and a second twisted yarn having a low modulus of elasticity of not more than 15 000 N/mm², which are end twisted together, wherein the yarn having the low modulus of elasticity has a fineness ≤ 940 dtex,
**characterized in that** the yarn having the high modulus of elasticity has a fineness ≤ 840 dtex.

2. Ply according to Claim 1, **characterized in that** the hybrid cords are of symmetrical construction, i.e. the first-twisting numbers of the first and second yarns are essentially equal with a maximum deviation of 7%, both the yarns are twisted in the same direction, either in the Z-direction or in the S-direction, and the cord is twisted together in the opposite direction, either in the S-direction or in the Z-direction, with an end-twisting number essentially equal to the first-twisting numbers, wherein the first- and end-twisting numbers are in the range from 380 to 500 T/m.

3. Ply according to Claim 1 or 2, **characterized in that** the strength members have the following stress-strain properties:
not more than 20 N at 1% strain,
not more than 35 N at 2% strain,
not more than 55 N at 3% strain,
not more than 80 N at 4% strain, and
at least 125 N at 6% strain.

4. Ply according to at least one of the preceding claims, **characterized in that** the yarn having the high modulus of elasticity is an aramid yarn.

5. Ply according to at least one of the preceding claims, **characterized in that** the yarn having the low modulus of elasticity is a nylon yarn.

6. Ply according to at least one of the preceding claims, **characterized in that** the strength members are dipped with an RFL dip for adherence between gum and strength member.

7. Ply according to at least one of the preceding claims, **characterized in that** the thread density within a calendered ply is in the range from 80 to 120 threads per 10 cm ply width and preferably in the range from 90 to 100 threads per 10 cm ply width.

8. Pneumatic vehicle tyre containing a belt bandage having a ply according to any one of Claims 1 to 7.

## Revendications

1. Couche dotée de renforts incorporés dans un mélange de caoutchouc non vulcanisé et destinée à la bande de ceinture de bandages pneumatiques pour roues de véhicules,
dans laquelle les renforts s'étendent essentiellement parallèlement les uns aux autres à l'intérieur de la couche et sont des câbles hybrides constitués d'un premier fil torsadé à haut module d'élasticité, d'au moins 25 000 N/mm², et d'un deuxième fil torsadé à module d'élasticité plus bas, non supérieur à 15 000 N/mm², qui sont torsadés l'un avec l'autre,
le fil à module d'élasticité plus bas présentant une finesse ≤ 940 dtex,
**caractérisée en ce que**
le fil à haut module d'élasticité présente une finesses ≤ 840 dtex.

2. Couche selon la revendication 1, **caractérisée en ce que** les câbles hybrides ont une structure symétrique, en d'autres termes, les nombres des premières torsions du premier et du deuxième fil sont essentiellement identiques avec un écart maximum de 7 %, **en ce que** les deux fils sont torsadés dans le même sens, à savoir dans le sens Z ou le sens S, **en ce que** le câble est assemblé par torsadage dans le sens opposé, à savoir dans le sens S ou le sens Z, avec un nombre final de torsions essentiellement identique aux premiers nombres de torsions, les premiers nombres de torsions et les nombres de torsions finaux étant de 380 à 500 T/m.

3. Couche selon la revendication 1 ou 2, **caractérisée en ce que** les renforts présentent les propriétés suivantes d'allongement en sollicitation :
au plus 20 N à un allongement de 1 %,
au plus 35 N à un allongement de 2 %,
au plus 55 N à un allongement de 3 %,
au plus 80 N à un allongement de 4 % et
au plus 125 N à un allongement de 6 %.

4. Couche selon au moins l'une des revendications précédentes, **caractérisée en ce que** le fil à haut module d'élasticité est un fil d'aramide.

5. Couche selon au moins l'une des revendications précédentes, **caractérisée en ce que** le fil à plus bas module d'élasticité est un fil de nylon.

6. Couche selon au moins l'une des revendications précédentes, **caractérisée en ce que** les renforts sont mouillés d'un agent de mouillage de RFL qui assure l'adhérence entre le caoutchouc et les renforts.

7. Couche selon au moins l'une des revendications précédentes, **caractérisée en ce que** la densité des fils dans une couche calandrée est de 80 à 120 fils par 10 cm de largeur de la couche et de préférence de 90 à 100 fils par 10 cm de largeur de la couche.

8. Bandage pneumatique pour roue de véhicule, contenant une bande de ceinture dotée d'une couche selon l'une des revendications 1 à 7.
